# EUROPÄISCHE PATENTSCHRIFT

(11) **EP 2 269 806 B1**
(45) Veröffentlichungstag und Bekanntmachung des Hinweises auf die Patenterteilung: **04.01.2012**
(21) Anmeldenummer: 10164429.2
(22) Anmeldetag: 31.05.2010
(51) Int. Cl.: B29C 63/00, B60R 7/06, B60R 13/02

(54) **Verfahren zur Herstellung mindestens einer Innenraumverkleidungskomponente für den Fahrgastraum eines Fahrzeugs**
Method for producing at least one interior cladding component for the passenger area of a vehicle
Procédé de fabrication d'au moins un composant d'habillage de l'espace intérieur pour l'espace passager d'un véhicule

(30) Priorität: 01.07.2009 DE 102009031216
(43) Veröffentlichungstag der Anmeldung: 05.01.2011
(73) Patentinhaber: Bayerische Motoren Werke Aktiengesellschaft, 80809 München (DE)
(72) Erfinder: Popp, Johann, 84036 Landshut (DE)

(56) Entgegenhaltungen:
- DE-A1- 10 305 545
- US-A- 4 892 770
- US-A- 5 252 164

## Beschreibung

Die vorliegende Erfindung betrifft ein Verfahren zur Herstellung einer Innenraumverkleidungskomponente für den Fahrgastraum eines Fahrzeugs gemäß dem Oberbegriff des Patentanspruches 1.

Instrumententafelverkleidungen von Fahrzeugen weisen üblicherweise einen mehrschichtigen, häufig einen dreischichtigen Aufbau auf, bestehend aus einem Trägerteil, das häufig auch als "Einleger" bezeichnet wird, einer darauf aufgebrachten Schaumschicht und einer auf die Schaumschicht aufgebrachten Dekorschicht. Bei der Dekorschicht handelt es sich häufig um eine elastische "Sprühhaut" aus einem Kunststoffmaterial, wohingegen der Einleger in der Regel ein relatives steifes Spritzgussteil ist.

Im Bereich unterhalb der eigentlichen Instrumententafel ist zumindest im Beifahrerbereich üblicherweise ein Handschuhkasten angeordnet. Der Handschuhkasten ist über einen schwenkbar angeordneten Handschuhkastendeckel zugänglich, dessen Dekor häufig an das Design der Dekorschicht der Instrumententafel angepasst ist.

Aus der US 5,252,164 ist ein Verfahren bekannt, zur Herstellung von Abdeckungen für Airbagkissen. Dabei wird eine Instrumententafel mit einer Klappe ausgebildet, die eine zusammenpassende Farbe und eine zusammenpassende Narbung aufweisen, wobei die Klappe geöffnet werden kann um die Entfaltung des Airbags zu ermöglichen, der in der Instrumententafel verstaut ist.

Aus der DE 103 05 545 ist ein Öffnungssystem für einen Gassack in einer Schalttafel für Seitenverkleidung eines Fahrzeuges bekannt, wobei im Bereich der Gassackabdeckung die Schalttafel bzw. die Türseitenverkleidung mit einem zusätzlichen Kunststoffteil aus Verstärkung versteift wird.

Aus der US 4,892,770 ist ein Fahrzeuginnenbauteil, wie eine Handschuhkastenklappe oder eine Konsolenklappe sowie ein Verfahren zu deren Herstellung bekannt, wobei ein Außengehäuse aus einem Schaummaterial gebildet wird, wobei das Schaummaterial an einen Gusseinsatz geheftet ist, welches das Bauteil verstärkt.

Aufgabe der Erfindung ist es, das oben beschriebene Verfahren zur Herstellung einer Innenraumverkleidungskomponente, insbesondere einer Instrumententafelverkleidung, weiter zu rationalisieren.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zur Herstellung mindestens einer Innenraumverkleidungskomponente, insbesondere einer Instrumententafelverkleidung für den Fahrgastraum eines Fahrzeugs, wobei zunächst eine Dekorschicht und ein Trägerteil hergestellt werden. Die Dekorschicht kann aus flüssigem Kunststoffmaterial gesprüht werden. Alternativ dazu kann die Dekorschicht z.B. auch aus Naturleder oder aus einem anderen Material und in anderer Weise als durch Sprühen hergestellt werden. Das Trägerteil, das häufig auch als "Einleger" bezeichnet wird, kann z.B. durch Spritzgießen hergestellt werden.

In einem weiteren Schritt werden die Dekorschicht und das Trägerteil durch eine Schaumschicht miteinander verbunden. Das Trägerteil und die Dekorschicht werden hierzu in ein Schaumwerkzeug eingebracht, wobei der Zwischenraum zwischen dem Trägerteil und der Dekorschicht mit einem Kunststoffschaum ausgeschäumt wird.

Das aus Trägerteil, Dekorschicht und dazwischen liegender Schaumschicht bestehende Teil wird im Folgenden als "Halbfertigteil" bezeichnet.

Der Kern der Erfindung besteht darin, dass das Halbfertigteil zerteilt wird in eine erste und mindestens eine zweite Innenraumverkleidungskomponente. Bei der ersten Innenraumverkleidungskomponente kann es sich um eine Instrumententafelverkleidung handeln. Bei der zweiten Innenraumverkleidungskomponente kann es sich um einen Deckel bzw. eine Deckelverkleidung für ein Staufach handeln, z.B. um eine Deckelverkleidung für den Deckel eines Handschuhkastens.

Das Zerteilen des Halbfertigteils in die mindestens zwei Innenraumverkleidungskomponenten kann mittels eines Stanzwerkzeugs, eines erhitzten Messers bzw. einer erhitzten Schneidvorrichtung oder in anderer Weise erfolgen.

Zusammenfassend werden mit der Erfindung folgende Vorteile erreicht. Für die Herstellung zweier oder mehrerer Innenraumverkleidungskomponenten werden weniger Werkzeuge benötigt als bisher, da die Dekorschicht und das Trägerteil für beide Innenraumverkleidungsraumkomponenten jeweils in einem Arbeitsgang und jeweils in einem Sprüh- bzw. Spritzgusswerkzeug hergestellt werden können. Auch die Herstellung der Schaumschicht erfolgt für beide Innenraumverkleidungskomponenten in einem einzigen Arbeitsgang. So kann beispielsweise eine Instrumententafelverkleidung und eine Verkleidung für einen Handschuhkastendeckel in einer Fertigungslinie synchron hergestellt werden.

Ein wesentlicher Vorteil ist ferner in der Reduzierung der sogenanten effektiven Klemmrandbreite zu sehen, da für beide Innenraumverkleidungskomponenten nur noch ein gemeinsamer Klemmrand benötigt wird anstatt wie bisher für jedes Teil ein eigener Klemmrand.

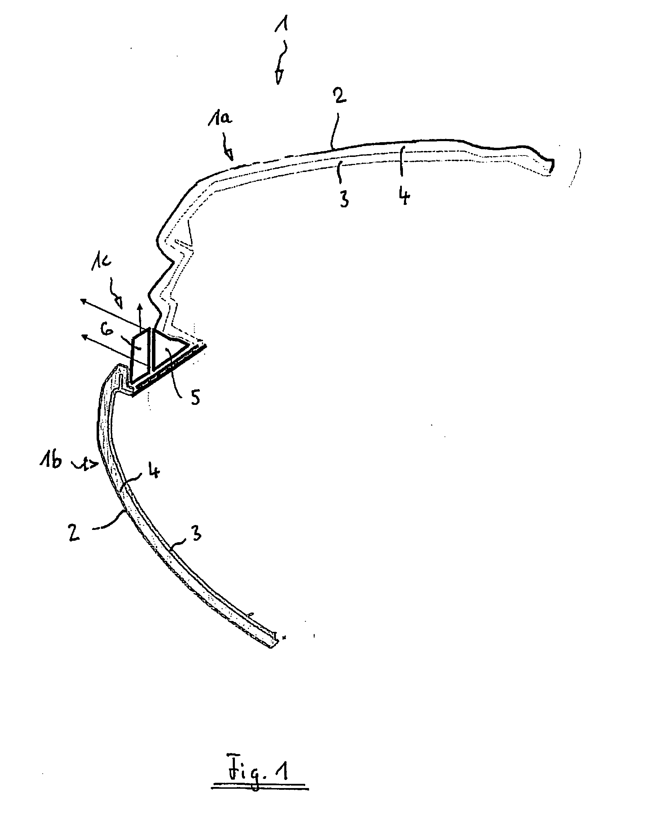

Im Folgenden wird die Erfindung im Zusammenhang mit der Zeichnung näher erläutert. Die einzige Figur 1 beschreibt das Grundprinzip der Erfindung.

Figur 1 zeigt ein Halbfertigteil 1, bestehend aus einer Dekorschicht 2, einem Trägerteil 3 und einer zwischen der Dekorschicht 2 und dem Trägerteil 3 befindlichen Halbhartschaumschicht 4. Der obere Bereich 1 a des Halbfertigteils 1 bildet später eine Instrumententafelverkleidung für den Fahrgastraum eines Fahrzeugs. Der untere Bereich 1b des Halbfertigteils 1 bildet eine Verkleidung für einen Deckel eines Handschuhkastens.

Zunächst werden in separaten Arbeitsgängen die Dekorschicht 2 und der Einleger 3 hergestellt. Anschließend werden die Dekorschicht 2 und der Einleger 3 in ein Schäumwerkzeug eingebracht. Der Zwischenraum zwischen der Dekorschicht 2 und dem Einleger 3 wird mit der Halbhartschaumschicht 4 ausgeschäumt, wodurch die Dekorschicht 2 und der Einleger 3 miteinander verbunden werden.

Mittels in das Schäumwerkzeug integrierten Schiebern wird ein zwischen dem oberen Bereich 1a und dem unteren Bereich 1b liegender Zwischenbereich des Halbfertigteils von dem Schäumprozess ausgenommen. Es wird also ein Hinterschnitt erzeugt, so dass das Halbfertigteil freigängig entformt werden kann.

Nach der Herstellung des Halbfertigteils wird das Halbfertigteil in zwei Komponenten zerteilt, nämlich in eine obere als Instrumententafelverkleidung vorgesehene Komponente, die im Wesentlichen durch den Bereich 1a gebildet ist, und eine untere, als Verkleidung für einen Handschuhkastendeckel vorgesehene Komponente, die im Wesentlichen durch den Bereich 1 b gebildet ist. Das Zerteilen kann beispielsweise durch eine Stanzvorrichtung, ein Heißmesser oder durch eine andersartige Schneidvorrichtung, durch eine Lasertrennvorrichtung o.ä. erfolgen.

## Patentansprüche

1. Verfahren zur Herstellung mindestens einer Innenraumverkleidungskomponente (1a, 1b) für den Fahrgastraum eines Fahrzeugs, mit folgenden Schritten:
- Herstellen einer Dekorschicht (2),
- Herstellen eines Trägerteils (3),
- Herstellen eines Halbfertigteils durch Herstellen einer das Trägerteil (3) mit der Dekorschicht (2) verbindenden Schaumschicht (4), wobei sich die Schaumschicht (4) zwischen dem Trägerteil (3) und der Dekorschicht (2) befindet,
wobei das Halbfertigteil (1) zerteilt wird in eine erste und eine zweite Innenraumverkleidungskomponente (1a, 1b),
**dadurch gekennzeichnet, dass** die Dekorschicht (2) und das Trägerteil (3) in ein Schaumwerkzeug eingebracht werden und dass anschließend in dem Schaumwerkzeug die Schaumschicht (4) hergestellt wird.

2. Verfahren nach Anspruch 1,
**dadurch gekennzeichnet, dass** sich die Dekorschicht (2) und das Trägerteil (3) über den Bereich sowohl der ersten als auch der zweiten Innenraumverkleidungskomponente (1a, 1b) erstrecken.

3. Verfahren nach Anspruch 1 oder 2,
**dadurch gekennzeichnet, dass** es sich bei ersten Innenraumverkleidungskomponente (1a) um eine Instrumententafelverkleidung handelt.

4. Verfahren nach einem der Ansprüche 1 bis 3,
**dadurch gekennzeichnet, dass** es sich bei zweiten Innenraumverkleidungskomponente (1b) um eine Verkleidung für ein Deckelelement eines Staufachs, insbesondere um eine Verkleidung für einen Deckel eines Handschuhkastenfachs handelt.

5. Verfahren nach einem der Ansprüche 1 bis 4,
**dadurch gekennzeichnet, dass** die Dekorschicht (2) durch Sprühen aus einem flüssigen Kunststoffmaterial hergestellt wird.

6. Verfahren nach einem der Ansprüche 1 bis 5,
**dadurch gekennzeichnet, dass** das Trägerteil (3) durch Spritzgießen hergestellt wird.

7. Verfahren nach einem der Ansprüche 1 bis 6,
**dadurch gekennzeichnet, dass** das Halbfertigteil (1) mittels einer Stanzvorrichtung bzw. mittels einer Schneidvorrichtung in die beiden Innenraumverkleidungskomponenten (1 a, 1 b) zerteilt wird.

## Claims

1. A method for producing at least one interior cladding component (1a, 1b) for the passenger compartment of a vehicle, comprising the following steps:
- producing a decoration layer (2),
- producing a carrier part (3),
- producing a semi-finished part by producing a foam layer (4) connecting the carrier part (3) to the decoration layer (2), the foam layer (4) being located between the carrier part (3) and the decoration layer (2),
the semi-finished part (1) being divided into a first and a second interior cladding component (1a, 1b),
**characterised in that** the decoration layer (2) and the carrier part (3) are introduced into a foam tool and **in that** the foam layer (4) is then produced in the foam tool.

2. A method according to claim 1,
**characterised in that** the decoration layer (2) and the carrier part (3) extend over the region both of the first and the second interior cladding component (1a, 1b).

3. A method according to claim 1 or claim 2,
**characterised in that** the first interior cladding component (1a) is an instrument panel cladding.

4. A method according to any one of claims 1 to 3,
**characterised in that** the second interior cladding component (1b) is a cladding for a cover element of a storage compartment, especially a cladding for a cover of a glove compartment.

5. A method according to any one of claims 1 to 4,
**characterised in that** the decoration layer (2) is produced by spraying from a liquid plastics material.

6. A method according to any one of claims 1 to 5,
**characterised in that** the carrier part (3) is produced by injection moulding.

7. A method according to any one of claims 1 to 6,
**characterised in that** the semi-finished part (1) is divided by means of a punching device or by means of a cutting device into the two interior cladding components (1a, 1b).

## Revendications

1. Procédé de réalisation d'au moins un composant d'habillage intérieur (1a, 1b) de l'habitacle d'un véhicule comprenant les étapes suivantes :
- réalisation d'une couche de décoration (2),
- réalisation d'une pièce de support (3),
- réalisation d'une pièce semi-finie par la réalisation d'une couche de mousse (4) reliant la pièce de support (3) à la couche de décoration (2),
* la couche de mousse (4) se trouvant entre la pièce de support (3) et la couche de décoration (2),
* on divise la pièce semi-finie (1) en un premier et un second composant d'habillage d'habitacle (1a, 1b),
procédé **caractérisé en ce qu'**
- on place la couche de décoration (2) et la pièce de support (3) dans un outil d'expansion, et
- ensuite, on réalise la couche de mousse (4) dans l'outil d'expansion.

2. Procédé selon la revendication 1,
**caractérisé en ce que**
la couche de décoration (2) et la pièce de support (3) s'étendent sur la zone à la fois du premier et du second composant d'habillage d'habitacle (1a, 1b).

3. Procédé selon la revendication 1 ou 2,
**caractérisé en ce que**
le premier composant d'habillage d'habitacle (1a) est un habillage de tableau de bord.

4. Procédé selon l'une des revendications 1 à 3,
**caractérisé en ce que**
le second composant d'habillage d'habitacle (1b) est un habillage pour un élément de plafond, un compartiment de rangement, notamment un habillage de couvercle de boîte à gants.

5. Procédé selon l'une des revendications 1 à 4,
**caractérisé en ce que**
la couche de décoration (2) est réalisée par la pulvérisation d'une matière plastique liquide.

6. Procédé selon l'une des revendications 1 à 5,
**caractérisé en ce que**
la pièce de support (3) est fabriquée par injection.

7. Procédé selon l'une des revendications 1 à 6,
**caractérisé en ce que**
la pièce semi-finie (1) est divisée en deux composants d'habillage d'habitacle (1a, 1b) à l'aide d'un dispositif d'emboutissage ou d'un dispositif de coupe.
